# EUROPEAN PATENT APPLICATION

(11) **EP 2 947 231 A1**
(43) Date of publication of application: **25.11.2015**
(21) Application number: 14169761.5
(22) Date of filing: 23.05.2014
(51) Int. Cl.: E04F 13/08, F16B 5/06, E04F 13/14

(54) **Clip**

(71) Applicant: Eternit NV, 1880 Kapelle-op-den-Bos (BE)
(72) Inventor: Moerenhout, Willy, 1880 Kapelle-op-den-Bos (BE); Slootmans, Guido, 1880 Kapelle-op-den-Bos (BE)
(74) Representative: Van Steenlandt, Wim August Maria

(57) **Abstract**

A clip suitable for mounting cementitious boards to a frame is provided, which clip comprising,
• A sheet having a front surface and a substantially flat back surface, the sheet comprising at least one aperture for receiving a fastener;
• At least two hook-shaped carrying means, contacting the front surface of the sheet and standing in front of the front surface;
• The aperture and the two hook-shaped carrying means defining an axis being parallel to the back surface, the axis coinciding with the aperture and the point on the front surface being at minimum but equidistant to the hook-shaped carrying means;

wherein the sheet comprises at least one rise at the front surface, the rise extending from a first point of the front surface at one side of the axis to a second point of the front surface at the other side of the axis, the sheet being uninterrupted along the rise, the rise is not a bulge.

## Description

### Field of the invention

The present invention relates to a clip suitable for mounting cementitious boards to a frame, such as in particular for mounting fiber cement boards or sidings to a support, typically a wooden support.

### Background of the invention

Cementitious boards, in particular fiber cement boards or sidings, are well known nowadays for providing a low maintenance facade for houses, offices, buildings etc. often to replace wooden or maintenance intensive alternatives.

Compared to wooden alternatives, such cementitious boards, like fiber cement sidings, are stiff and heavy.

As such it requires special mounting systems to mount these and keep these boards fixed to walls.

Typically a frame, often a metal such as an aluminum or galvanized steel frame, but most preferred a wooden support structure or frame is fixed to the load bearing wall, to which frame the boards are fixed.

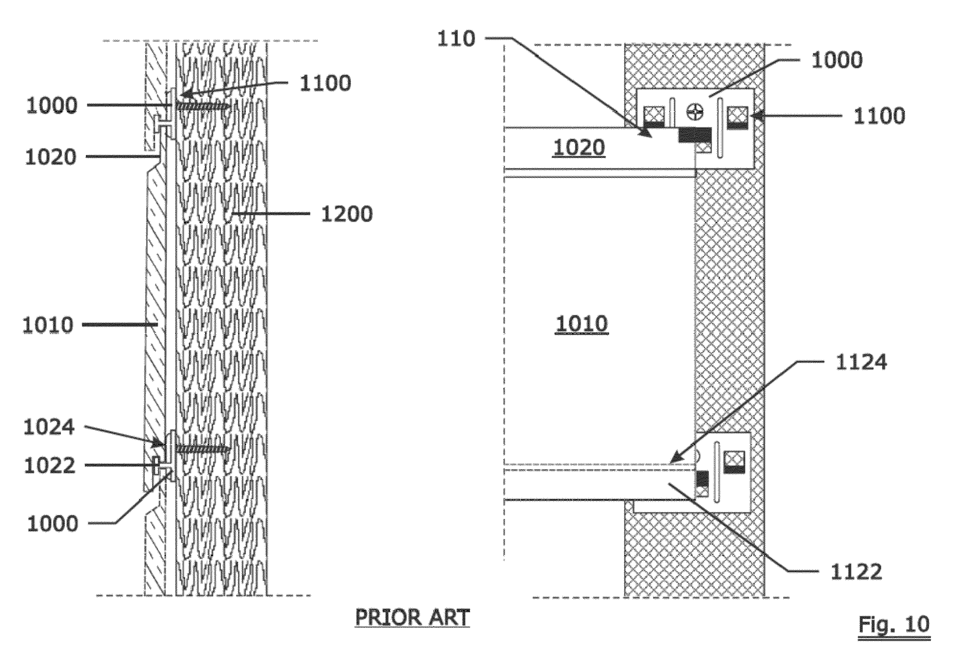

Mounting aids and clips are known to provide a more easily mounting. An example of such clips is the "Cedral Click" clips, available from Eternit NV, Belgium, as shown in figure 10. These clips 1000 provide the possibility to mount fiber cement sidings 1010, which have a substantially rectangular cross section with at both sides a tapered profile, at the top side of the siding the tapered edge 1020 being present at the face side of siding. At the opposite, lower side of the siding a tapered edge 1022, combined with a slit 1024 to receive a hook 1100 of the clip 1000, is provided at the backside. The edges are so shaped that the lower tapered edge can overlap and hide the tapered edge at the top side of the adjacent, lower siding, once mounted.

When this clip 1000 is screwed to the wooden frame 1200, the clip may bend over a vertical axis, causing the two hooks 1100 and 1110 to lift from the surface of the wooden frame. The hooks are not longer aligned parallel to the fiber cement board and/or do not longer fit tightly in the slit 1024 and may cause problems of mounting and maintaining the siding 1010 hooked on the clips over time.

### Summary of the invention

It is an object of the present invention to provide a clip which gives higher dimensional stability during mounting on a frame, in particular a wooden frame. The clip reduces the tendency to bending and lifting of its hook-shaped carrying means upwards from the frame surface.

It is an advantage of some embodiments of the present invention to provide a clip which avoids the above mentioned drawback of the existing clips.

According to a first aspect of the present invention, a clip suitable for mounting cementitious boards to a frame is provided, which clip comprising,
- A sheet having a front surface and a substantially flat back surface, the sheet comprising at least one aperture for receiving a fastener;
- At least two hook-shaped carrying means, contacting the front surface of the sheet and standing in front of the front surface;
- the aperture and the two hook-shaped carrying means defining an axis being parallel to said back surface, the axis coinciding with the aperture and the point on the front surface being at minimum but equidistant to the hook-shaped carrying means;
wherein the sheet comprises at least one rise at the front surface, the rise extending from a first point of the front surface at one side of the axis to a second point of the front surface at the other side of the axis, the sheet being uninterrupted along the rise, the rise is not a bulge.

A bulge or "bent" typically is a rise provided by a corresponding dent created at the back surface of the sheet, typically by impressing this dent in the back surface of the sheet.

According to embodiments, the clip suitable for mounting cementitious boards to a frame is provided, which clip comprising,
- A sheet having a front surface and a substantially flat back surface, the sheet comprising at least one aperture for receiving a fastener;
- At least two hook-shaped carrying means, contacting the front surface of the sheet and standing in front of the front surface;
- The aperture and the two hook-shaped carrying means defining an axis being parallel to the back surface, the axis coinciding with the aperture and the point on the front surface being at minimum but equidistant to the hook-shaped carrying means;
wherein the sheet comprises at least one rise at the front surface, the rise extending from a first point of the front surface at one side of the axis to a second point of the front surface at the other side of the axis, the sheet being uninterrupted along the rise, the rise being a fold, a ply or a rib.

With fastener is to be understood any means that is able to mechanically fix the clip to an underlying support, such as a screw, nail, rivet or alike.

The support or supporting structure can be a metal (e.g. aluminum, steel or stainless steel) support, or a wooden frame, typically a soft wooden structure or frame.

The axis coinciding with the aperture is understood as the axis coinciding with the center point of the aperture.

The rise extending from a first point to a second, different point in fact causes a rise to stretch out from a first point to a second point, these points being the extrema or outer ends of the rise. These points are located at the front surface of the sheet. Optionally, though not necessarily one or both points may be located at the edge of the sheet.

The sheet may be provided from metal, such as steel, aluminum alloy, cupper alloy, stainless steel, and alike, or out of polymer such as polyamide (PA), polyester (PES), polyethylene (PE), polypropylene (PP) or acrylonitrilebutadiene-styrene (ABS), or alike.

The thickness of the surface is to be sufficiently strong and stiff to be able to carry the weight of the cementitious boards or sidings, and to withstand occurring wind loads and may depend on the type of material used to provide the clip. Typically the thickness of the clip is in the range of 0.4 to 1 mm inclusive, such as in the range of 0.5 to 0.8 mm, such as 0.5mm, 0.55mm, 0.6mm, 0.65mm, 0.7mm and 0.75mm.

When a steel surface is used, the thickness of the steel surface may vary between 0.4 to 1 mm inclusive, such as in the range of 0.5 to 0.8 mm, such as 0.5mm, 0.55mm, 0.6mm, 0.65mm, 0.7mm and 0.75mm.

Most preferably stainless steel, such as stainless steel of type A2 or A4, e.g. AISI 302 or AISI 304 type stainless steel, such as AISI 304 Werkstoff-nr 1.4310, is used.

With substantially flat back surface is understood that this surface is planar, i.e. that, next to the dents which may be provided to obtain the rises, the back surface of the sheet has no other protrusions or thickening at the back surface.

The rise or rises provided according to the invention causes that, when the fastener are driven too deep in to the underlying support structure, e.g. wooden frames, the clip has less tendency to bend around this axis, causing the two hook-shaped carrying means to lift upwards in the direction of the front surface of the sheet. Such lift may cause the hook-shaped carrying means no longer to fit correctly or correctly enough with the surface of the board to be carried along the provided contact surface. The provision of the rise or rises, cause the so-called momentum of inertia of the sheet to increase.

According to some embodiments of the invention, the at least one rise may be provided by a rib having a length in axial direction of this rib, the rib being attached to the front surface of the sheet, e.g. at discrete points or all along its length to the front surface of the sheet.

According to some embodiments, this rib is a metal or polymer rib, such as e.g. a metal or polymer wire being welded or soldered to the sheet. The wire may be a substantially round wire (i.e. having a circular cross section) or may be a profiled wire.

According to some embodiments, this rib is a metal wire attached to the front surface of the sheet. According to some embodiments, this rib is a metal wire soldered or welded to the front surface of the sheet.

In case the clip is manufactured (or realized) from a metal sheet, this rib can be made out of the same or a different metal, e.g. a round or profiled metal wire,, and be soldered or welded to the sheet along the length of the rib.

According to some embodiments of the invention, the sheet may have a substantially rectangular shape, one pair of sides (or edge) intersecting with the axis along the sides, the rise being provided by folding the side towards the front surface.

Substantially rectangular means that the edges of the rectangle may provide small indentations, e.g. due to the manufacturing process, and that the corners of the rectangle may be rounded.

The sides folded can be fold over an angle of preferably more than 90°, most preferably over an angle of about 180°, e.g. 180°, or even exceeding 180°.

The fold may be provided by folding the side using folding over one or more consecutive discrete angles. The fold may have a polygonal cross section or a spiral cross section, the section being the section with a plane perpendicular to the axis of the fold.

According to some embodiments of the invention, at least one rise may be a ply of the sheet, protruding towards the front surface. This ply may have a V- or U-shaped cross section, the section being the section with a plane perpendicular to the axis of the ply.

In case of a rise being a ply or a fold, the first and second point are typically located at the side or edge of the sheet.

Optionally the clip comprises a sheet having additional rises at its front surface. These rises may be provided for pressing the contact surface of the cementitious boards to be fixed with the clip, to the hook-like carrying means. Such rises, being ribs, plies, folds or bulges, are usually provided in a direction parallel to the mounting direction of the board in the clip, and substantially parallel to the axis coinciding with the aperture and the point on the front surface being at minimum but equidistant to the hook-shaped carrying means.

A bulge or "bent" typically is provided by a corresponding dent created at the back surface of the sheet.

Optionally, these additional rise or rises, may form one integral rise, together with the rise extending from a first point of the front surface at one side of the axis to a second point of the front surface at the other side of the axis.

The provision of such additional rises may create a recession in which the fastener or fastening means (like a screw or rivet) can be sunken.

According to some embodiments of the invention, the rise may be U- or V-shaped, the lower section of the U- or V-shape intersecting with the axis.

According to some embodiments of the invention, the at least one rise may be provided between the aperture and the point on the front surface being at minimum but equidistant to the hook-shaped carrying means.

According to some embodiments of the invention, the aperture may be positioned between the at least one rise and the point on the front surface being at minimum but equidistant to the hook-shaped carrying means.

According to some embodiments of the invention, at least a second rise may be provided at the front surface, the rise extending from a first point of the front surface at one side of the axis to a second point of the front surface at the other side of the axis, the sheet being uninterrupted along this second rise.

According to some embodiments, the second rise is provided between the aperture and the point on the front surface being at minimum but equidistant to the hook-shaped carrying means.

According to some embodiments, the aperture is positioned between the second rise and the point on the front surface being at minimum but equidistant to the hook-shaped carrying means.

Preferably the first and second rises are provided are opposite sides of the aperture.

The circumference of the sheet of the clip may have any shape, however typically is polygonal, typically rectangular, square, elliptic or even round, shaped. The corners of the polygonal shape may be rounded.

According to some embodiments of the invention, the hook-shaped carrying means may form an integral part with the sheet, the hook-shaped carrying means being bended out of the sheet.

The hook-shaped carrying means may be provided by making a U- or V-shape slit in the sheet, and bending the lip being so provided, over a first angle up to about 150° (and typically about 90°) upwards, i.e. front surface of the sheet, around the connection between the lip and the sheet, and plying the bended lip again round an axis substantially parallel to the connection between the lip and the sheet, over again a second angle such that part of the outer part of the lip is parallel or slightly inclined in view of the front surface of the sheet.

Optimally, additional to the two hook-shaped carrying means, additional similar or different hook-shaped carrying means may be provided.

According to embodiments of the present invention, the clip comprises three hook-shaped carrying means, all being provided by making a U -shape slit in the sheet, and bending the lips being so provided, over an angle of about 90° upwards, i.e. front surface of the sheet, around the connection between the lip and the sheet, and plying the bended lip again round an axis substantially parallel to the connection between the lip and the sheet, over again a second angle of about 90° such that part of the outer part of the lip is substantially parallel in view of the front surface of the sheet. The sheet of the clip has a substantially rectangular circumference, two of the hook-shaped carrying means are provided with their concavity oriented to one of the long sides of the rectangular shape, the third hook-shaped carrying means being provided with its concavity oriented to the other of the long sides of the rectangular shape. The connections between the lip and the sheet are all substantially coaxial.

These bending actions may be done in one bending process step or in different steps. The cutting of the U- or V-shaped slits may be done by punching or cutting, such as laser cutting or cutting with appropriate cutting blades.

The sheet of the clip may further comprise additional apertures for receiving additional fastener.

According to some embodiments of the invention, the at least one rise may have a thickness of 0.5 to 2mm.

The thickness of the rise is to be understood as the maximum distance, in a direction perpendicular to the front surface of the sheet, between the front surface of the sheet adjacent the rise and the points along the surface of the rise. More preferred, the at least one rise may have a thickness of 0.6 to 1.8mm, even having a thickness in the range of 0.7 to 1.6mm, such as 0.8mm, 0.9mm, 1.0mm, 1.1 mm, 1.2mm, 1.3mm, 1.4mm 1.5mm, 1.6mm or 1.7mm.

The hook-shaped carrying means may have a distance between carrying part of the hook shaped carrying means and the sheet, or of 2mm to 10mm, such as between 3mm and 8mm, e.g. 5.5 mm or 6.9mm.

The height of the upstanding part of the hook shaped carrying means may vary between 2mm and 8mm, such as between 3 and 7mm, e.g. 3mm, 3.1 mm, 3.2mm, 3.3mm, 6.2mm, 6.3mm, 6.4mm, 6.5mmm, 6.6mm or 6.7mm

The width of the upstanding part of the hook shaped carrying means may vary between 4mm and 20mm, such as between 5 and 18mm, e.g. 6mm, 7mm, 8mm, 9mm, 10mm, 11mm, 12mm, 13mm, 14mm, 15mm, 16mm or 17mm.

The apertures typically, but not necessarily, are of circular shape and may have a diameter in the range of 2 to 8mm, typically in the range of 3 to 7mm, such as 3.5mm, 4mm, 4.2mm, 4.5mm or 5mm.

The sheet may preferably have a substantially square or rectangular shape, with sides having a length of 20 to 110mm, -such as a long side of 30 to 100 mm, typically between 50 and 80mm, e.g. 55mm, 60mm, 65mm or 70mm. The short side may vary between 20 and 50mm, such as between 30 and 40mm, e.g. 31mm, 32mm, 33mm, 34m 35mm, 36mm, 37mm, 38mm or 39mm.

The first and second point between the rise extend or stretch out, are preferably on a distance of 18 to 95mm one from the other, typically between 25 and 85mm, such as between 43 and 70mm, e.g. 47, 48, 49, 50, 51, 52 or 53 mm.

The rise is typically substantially straight or linear, or slightly bended.

The clips according to the first aspect of the invention may be used to mount cementitious boards, such as fiber cement boards, to support systems, typically frames in aluminum, steel or wood.

Fiber cement boards or products are well known in the art. The fiber cement boards are made out of fiber cement slurry, which is formed in a so-called green fiber cement product, and cured.

Dependent to some extent on the curing process used , the fiber cement slurry typically comprises water, process or reinforcing fibers which both may be natural organic fibers (typically cellulose fibers) or synthetic organic fibers (polyvynilalcohol, polyacrilonitrile, polypropylene, polyamide, polyester, polycarbonate, polyethylene, etc.), cement e.g. Portland cement, limestone, chalk, quick lime, slaked or hydrated lime, ground sand, silica sand flour, quartz flour, amorphous silica, condensed silica fume, microsilica , metalkaolin, wollastonite, mica, perlite, vermiculite, aluminum hydroxide, pigments, antifoaming agents, flocculants, and other additives. Optionally a color additive (e.g. pigments) is added, to obtain a fiber cement product which is so-called colored in the mass.

The green fiber cement board is cured, typically by curing to the air (air cured fiber cement products) or under pressure in presence of steam and increased temperature (autoclave cured). For autoclave cured products, typically sand is added in the fiber cement slurry. The autoclave curing typically results in the presence of 11.3 Å (angstrom) Tobermorite in the fiber cement board.

Fiber cement boards, also referred to as fiber cement sheets or fiber cement panels, usually are made using the well known Hatschek-process, flow-on process or Magnani-process.

The fiber cement board may be obtained by first providing a green fiber cement board, which is subjected to compression, before curing, i.e. by air curing or autoclave curing.

The "green" fiber cement board, after being made by the Hatschek-process, may be first pre-cured to the air, after which the pre cured board is further air cured until it has its final strength, or autoclave cured using pressure and steam, to give the board its final properties.

Typical properties are thicknesses of the board, which may vary from 4mm to 20mm, such as from 7.0 mm to 13.0 mm. The density of the boards may vary from 0.5 kg/dm³ to 2.2 kg/dm³, such as from 0.6 kg/dm³ to 2.0 kg/dm³. The dimensions of the board, next to the thickness, may vary from about 1 meter to about 1.7 meter in width and 1 meter to 3.6 meter in length. When the fiber cement boards are used as sidings, the boards typically are rectangular, optionally foreseen of recesses for receiving the carrying means, or a tongue and groove means, the rectangle having a short side in the range of 150 to 600mm, the long side may range up to 4m. Typical dimensions are 150 to 400mm by 3.6m or less, such as 150 to 190mm by 3.6m or less.

The clips according to the invention are of particular use for mounting of sidings, such as fiber cement sidings. Typically such fiber cement sidings may be autoclaved fiber cement boards, optionally provided with recesses, tapered edges, slits and alike to facilitate mounting by means of the clips. The sidings may be provided with a design, typically a profiled design of the face side, imitating a wood structure. This design may be provided by grinding and milling after the fiber cement has cured, or by profiling the green sheet, e.g. when using a Hatschek-process, using an accumulating drum with a surface mirroring the wood imitating image, or by using a press to densify the green sheet, having a surface mirroring the wood imitating image.

The present clip is in particular of use for mounting sidings, such as weatherboard and clapboards. Hence to mount sidings having a plank-like shape with a long and a short side.

According to a further aspect of the present invention, a method to mount a cementitious board to a frame is provided wherein the method comprises the steps of
- Providing a frame;
- Providing at least one clip according the first aspect of the invention;
- Mounting the clips to the support;
- Contacting the cementitious board to the hook-shaped carrying means, thereby carrying the cementitious board to the frame.

The frame typically is a steel, aluminum or wooden support structure.

The cementitious board may be a siding. Preferably the cementitious board is a fiber cement board, e.g. siding.

The siding and the clip may be shaped such that, when mounting the siding to the frame, the clips are invisible when looked upon from the side is opposite to the side where the front surface of the clip and the siding contact.

The clips according to the invention may provide the possibility to mount fiber cement sidings having a substantially rectangular cross section with at both sides a tapered profile, at the top side of the siding the tapered edge being present at the face side of siding. At the opposite, lower side of the siding a tapered edge combined with a slit to receive the hook shaped carrying means of the clip, is provided at the backside. The edges are so shaped that the lower tapered edge can overlap and hide the tapered edge at the top side of the adjacent, lower siding, once mounted.

The siding, such as the Cedral Click sidings of Eternit NV, Belgium, is autoclave cured fiber cement boards, provided with a face having a wood-like look, and a density of about 1300 kg/m³. Sidings typically have a density in the range of 1100 to 1700 kg/m³.

According to further aspect of the present invention, a clip according to the first aspect of the present invention is used for mounting cementitious boards to a frame.

The independent and dependent claims set out particular and preferred features of the invention. Features from the dependent claims may be combined with features of the independent or other dependent claims, and/or with features set out in the description above and/or hereinafter as appropriate.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

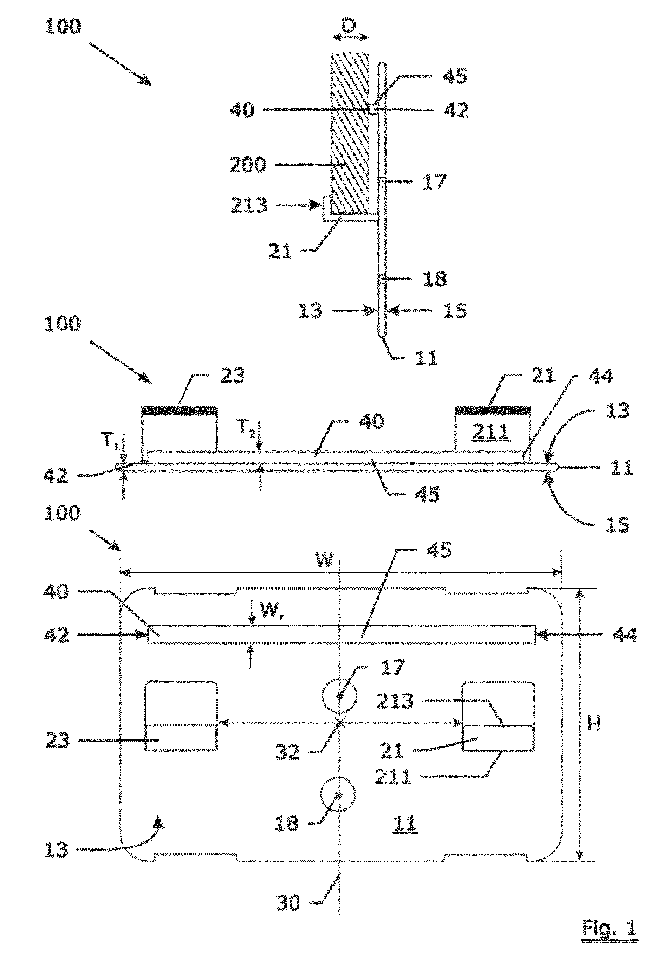

Fig. 1 is a schematically view of a first clip according to the invention, in side view, top view and front view.
Fig. 2 is a schematically view of the clip of figure 1, being a side view, when used to mount a fiber cement siding.
Fig. 3 is a schematically view of a second clip according to the invention, in side view and front view.
Fig. 4 is a schematically view of this second clip according to the invention, in side view when used to mount a fiber cement siding in visible and invisible mounting.
Fig. 5 is a schematically view of a third clip according to the invention, in side view, top view and front view.
Fig. 6 is a schematically view of the clip of figure 5, being a side view, when used to mount a fiber cement siding.
Fig. 7 is a schematically view of a fourth clip according to the invention, in side view, top view and front view.
Fig. 8 and 9 are schematically views of further clip according to the invention,
Fig. 10 is a schematically view of a clip and its use, according to prior art.

The same reference signs refer to the same, similar or analogous elements in the different figures.

### Description of illustrative embodiments

The present invention will be described with respect to particular embodiments.

It is to be noticed that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.

Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could. Furthermore, the particular features or characteristics may be combined in any suitable manner in one or more embodiments, as would be apparent to one of ordinary skill in the art.

In the first figure, a clip 100 according to the invention is shown in side, top and front view.

This clip comprises a metal sheet 11 (out of AISI 304 stainless steel, Werkstoff-nr 1.4310) having a front surface 13 and a substantially flat back surface 15. There are two apertures 17 and 18, for receiving a fastener, which is typically a screw when the clip is used to mount sidings or boards to a wooden frame. This fastener may be a rivet when a frame out of steel, such as stainless steel or aluminum is provided.

This clip comprises two hook-shaped carrying means 21 and 23 contacting the front surface of the sheet and standing in front of the front surface. These two hook-shaped carrying means are provided by cutting a U-shaped slit and bending the lip 211 to the front side over an angle of 90°, and bending the lip again over 90° such that there is a small piece of sheet 213 which is in parallel to the front surface.

The aperture and these two hook-shaped carrying means defining an axis 30 being parallel to the back surface and which axis coincides with the aperture and the point 32 on the front surface, which point 32 is at minimum distance of, but equidistant to the hook-shaped carrying means.

The sheet comprises at least one rise 40 at the front surface, which rise extending from a first point 42 of the front surface, point 42 being at one side of the axis, to a second point 44 of the front surface, which point 44 is at the other side of the axis. The sheet remains uninterrupted along the rise 40.

The thickness T1 of the sheet is 0.6mm; it has a width W of 60mm and height H 37mm.

The rise is realized by providing an optionally profiled wire 45 to the front surface of the sheet. This wire, being a metal wire, is soldered or welded to the sheet. The wire provides as such a corresponding rise of a height T2 and width Wr in the range of about 1.4mm to about 3mm.

The aperture 17, of diameter 4.2mm and centrally positioned along the width W, is located between the rise 40 and the two hook-shaped carrying means. The second, identical aperture 18 is coaxial with point 32 and first aperture 17.

The clip can carry boards 200 having a thickness D of about 5.5mm in its hook-shaped carrying means in case the lips of the hook-shaped carrying means may be visible a the visible side of the board, e.g. a siding made from fiber cement. The thickness D1 is defined by the dimensions of the rise 40 and the hook-shaped carrying means 21 and 23

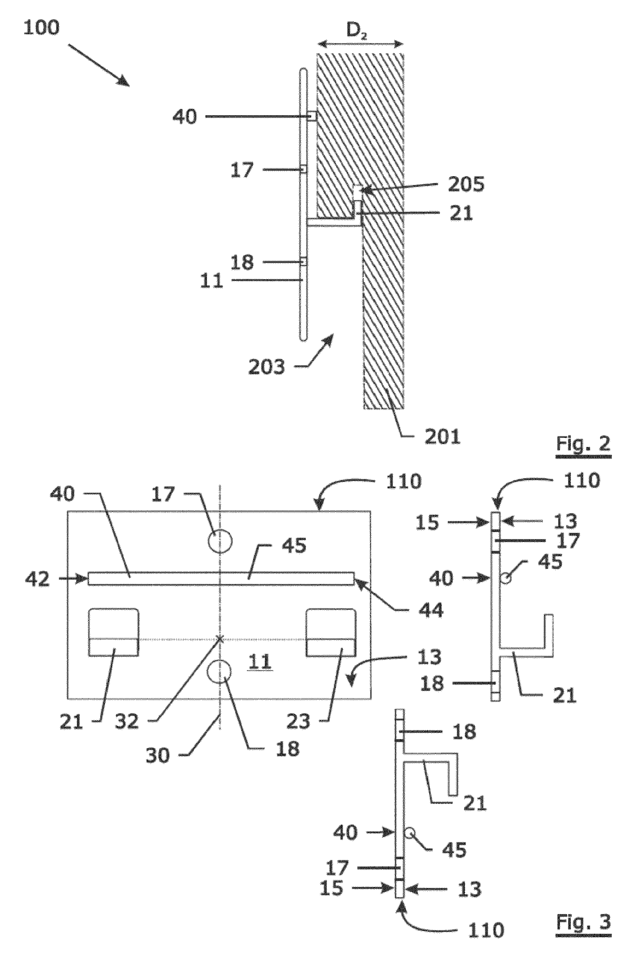

In an alternative use as shown in figure 2, this clip 100 is used to mount sidings in an invisible way; the board 201 has at its side contacting the clip, a thinning 203 along a zone, and a recessed slit 205 for receiving the lip of the hook-shaped carrying means 21. Examples of such siding are "Cedral Click" sidings of Eternit NV, Belgium

Figure 3 shows an alternative clip 110 in front and side view, where the same references refer to the same features. The dimensions and materials used are identical as the clip 100.

The rise is positioned between the aperture 17 and the two hook-shaped carrying means.

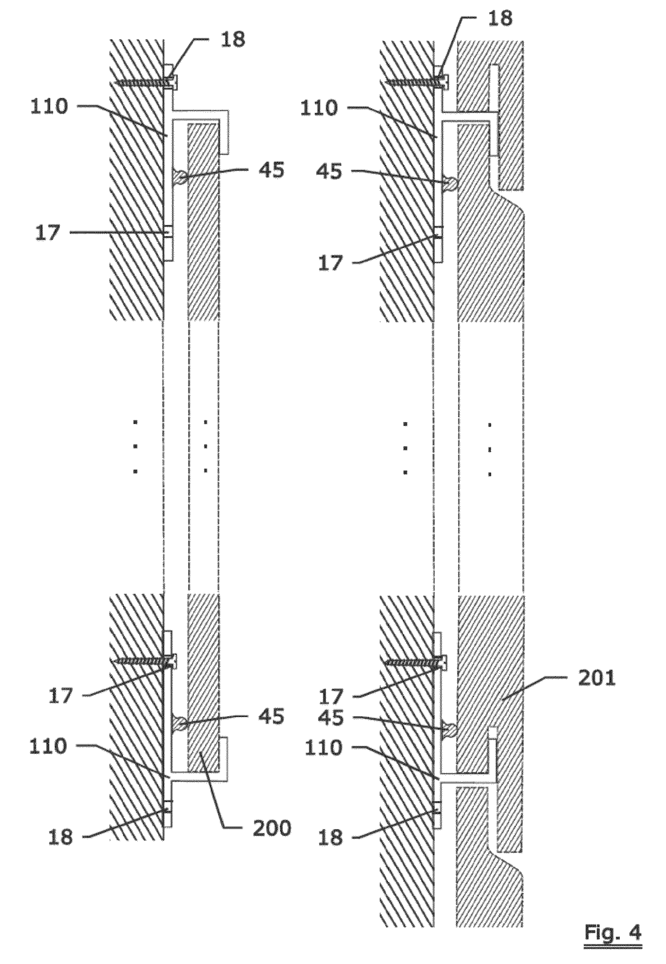

As is shown in figure 4, this clip 110 can be used to mount a board 200 and 201 at its top and bottom side, with visible or invisible mounting. The boards 200 or 201 are to be positioned in the clips after these have been screwed or fixed to the support.

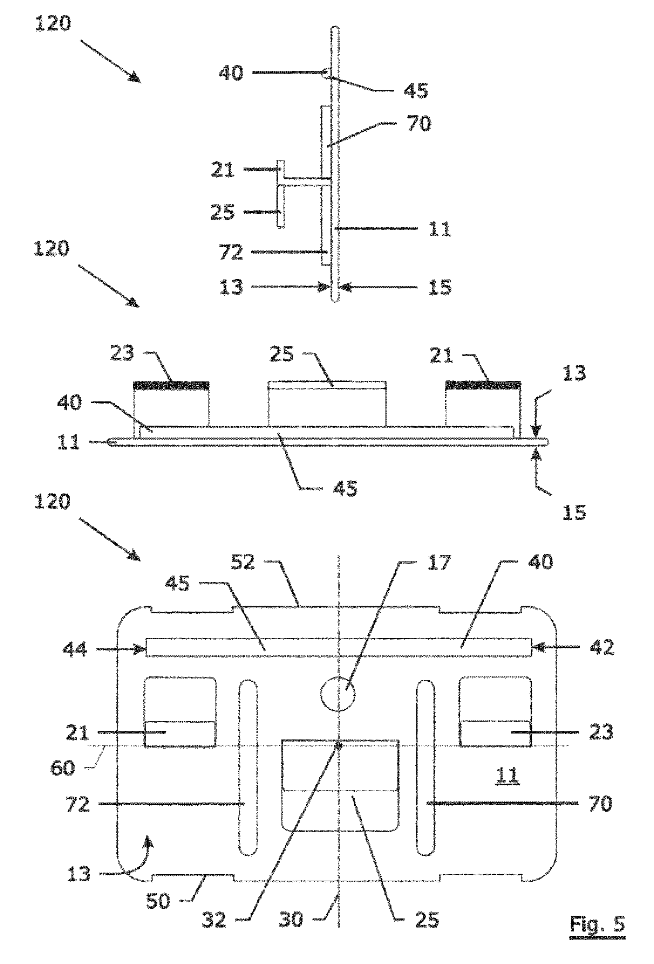

For invisible mounting, a clip 120 as shown in figure 5 is more convenient. For clip 120 the same references refer to the same features. The dimensions and materials used are identical as the clip 100. The clip further comprises a third hook-shaped carrying means 25, which concave side or opening is oriented to the side 50 of the rectangular shape of the clip 120, whereas the opening or concave side of the means 21 and 23 are oriented to the opposite side 52 of the shape of the clip. The lips of the three hook-shaped carrying means are connected to the sheet 11, these connections being aligned along an axis 60.

The clip has two additional rises, here bulges, at its front surface 13, being bulges 70 and 72. They extend in a direction parallel to the axis 30.

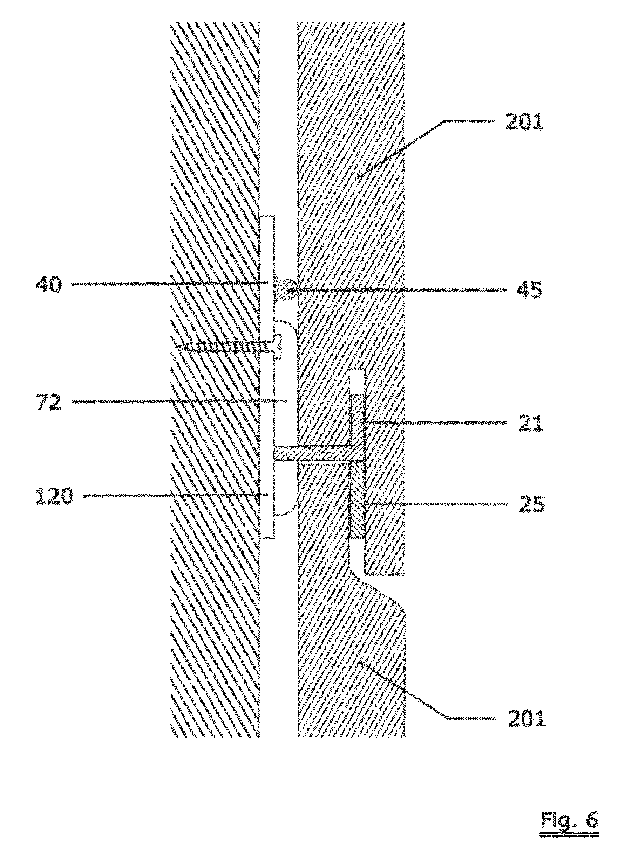

As shown in figure 6, this clip 120 facilitates the mounting of boards 201, such as sidings in fiber cement, using invisible mounting. In the alternative, these additional rises may b e provided using an identical or similar metal wire as used for the rise 40.

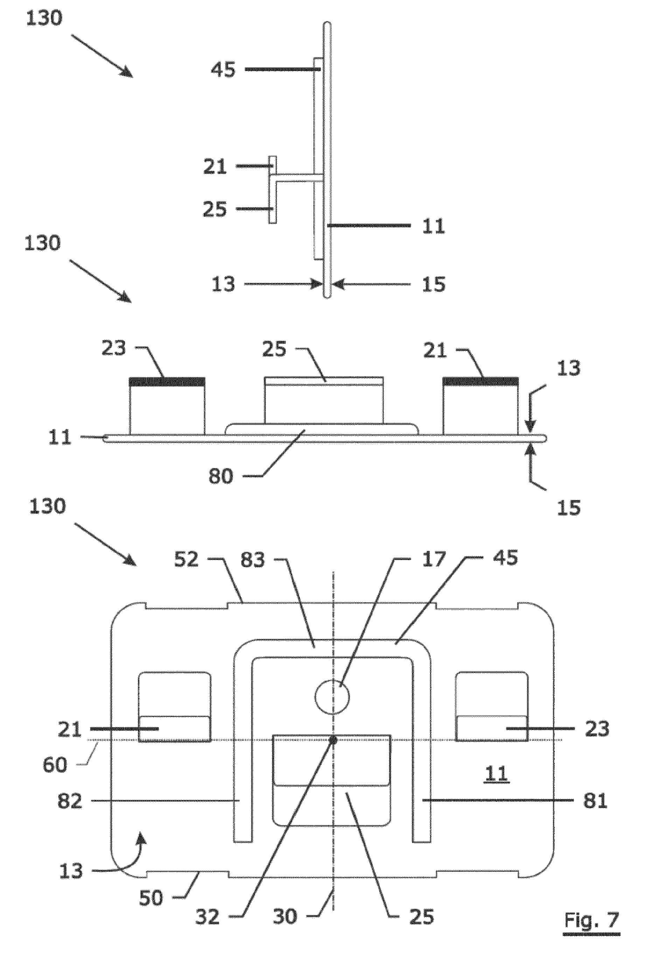

Still an other clip 130 is shown in figure 7, which clip is convenient for invisible mounting of sidings. For clip 130 the same references refer to the same features. The dimensions and materials used are identical as the clip 120.

The clip 130 has one rise, being a wire 45 at its front surface 13, being U shaped. The legs 81 and 82 of the U shape are extending parallel to the axis 30. The middle section 83 of the U-shape of the rise crosses the axis 30. The aperture 17 is located between the rise where it crosses the axis 30, and the two hook-shaped carrying means 21 and 23.

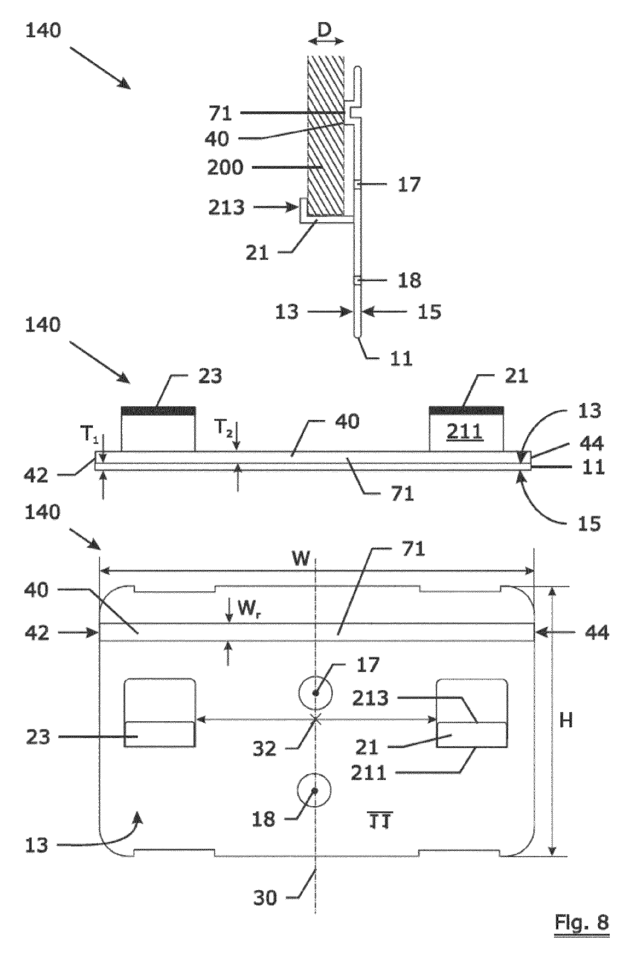

Still an other clip 140 is shown in figure 8. For clip 140 the same references refer to the same features as the other clips referred to above. The rise 40 is created by making a ply 71 in the sheet, causing the ply to protrude towards the front surface of the sheet.

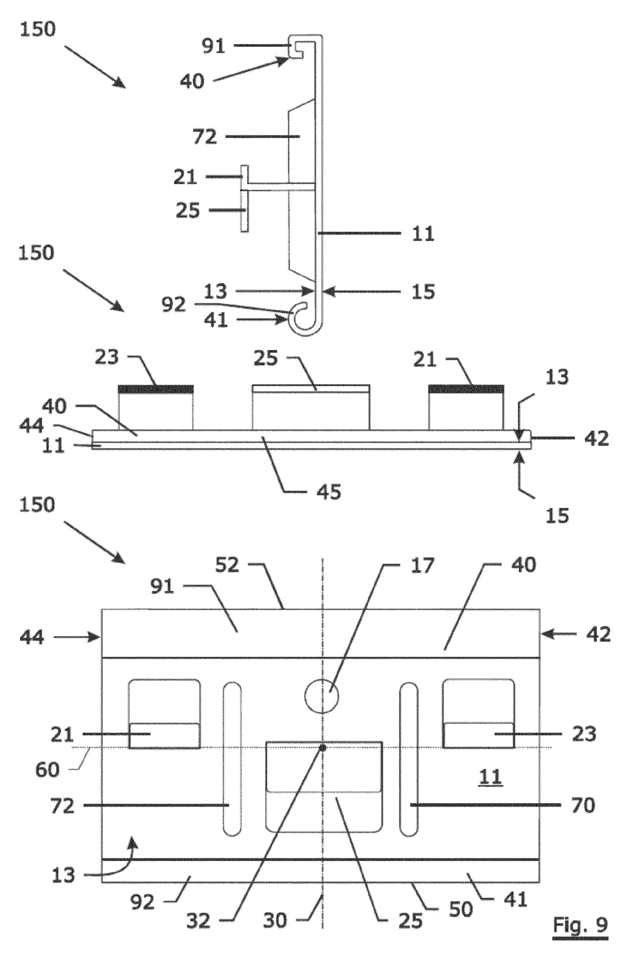

A further clip 150 according to the invention is shown in figure 9., the same references referring to the same features. This clip 150 has two rises 40 and 41, being provided as folds 91 and 92. The first rise 40 is provided by folding the edge of the sheet at side 52 towards the front surface, over three discrete successive angles of about 90°. As such a fold 91 with a polygonal cross section is obtained. The second rise 41 is provided by rolling the edge of the sheet at side 50 towards the front surface.. As such a fold 92 with a spiral cross section is obtained.

It is understood that the two rises may be provided busing folding or rolling techniques, providing similar or identical rises.

It is to be understood that although preferred embodiments and/or materials have been discussed for providing embodiments according to the present invention, various modifications or changes may be made without departing from the scope and spirit of this invention.

## Claims

1. A clip (100) suitable for mounting cementitious boards to a frame, said clip comprising,
• A sheet (11) having a front surface (13) and a substantially flat back surface (15), said sheet comprising at least one aperture (17) for receiving a fastener;
• At least two hook-shaped carrying means (21, 23), contacting said front surface of said sheet and standing in front of said front surface;
• Said aperture and said two hook-shaped carrying means defining an axis (30) being parallel to said back surface, said axis coinciding with said aperture and the point (32) on said front surface being at minimum but equidistant to said hook-shaped carrying means;
wherein said sheet comprises at least one rise (40) at said front surface, said rise extending from a first point (42) of the front surface at one side of the axis to a second point (44) of the front surface at the other side of the axis, the sheet being uninterrupted along the rise, said rise not being a bulge.

2. A clip according to claim 1, wherein said rise is a fold, a ply or a rib.

3. A clip according to claim 1 or 2, wherein the at least one rise is provided by a rib having a length in axial direction of this rib, said rib being attached to the front surface of the sheet.

4. A clip according to claim 3, wherein the rib is a metal wire attached to the front surface of the sheet.

5. A clip according to claim 4, wherein the rib is a metal wire soldered or welded to the front surface of the sheet.

6. A clip according to claim 1 or 2, wherein the sheet has a substantially rectangular shape, one pair of sides intersecting with said axis along said sides, the rise being provided by folding the side towards the front surface.

7. A clip according to claim 6, wherein the fold haves a polygonal cross section or a spiral cross section.

8. A clip according to claim 1 or 2, wherein the at least one rise is a ply at the front surface.

9. A clip according to claim 8, wherein the ply is U- or V- shaped, the lower section of the U- or V-shape intersecting with said axis.

10. A clip according any one of the preceding claims, wherein said at least one rise is provided between said aperture and the point (32) on said front surface being at minimum but equidistant to said hook-shaped carrying means.

11. A clip according any one of the claims 1 to 10, wherein said aperture is positioned between the at least one rise and the point (32) on said front surface being at minimum but equidistant to said hook-shaped carrying means.

12. A clip according to any one of the preceding claims, wherein at least a second rise is provided at said front surface, said rise extending from a first point of the front surface at one side of the axis to a second point of the front surface at the other side of the axis, the sheet being uninterrupted along this second rise.

13. A clip according any one of the preceding claims, wherein said hook-shaped carrying means forms an integral part with the sheet, said hook-shaped carrying means being bended out of said sheet.

14. A clip according any one of the preceding claims, wherein the at least one rise has a thickness of 0.5 to 2mm.

15. The use of a clip according to any one of the proceeding claims, for mounting cementitious boards to a frame.
